# EUROPEAN PATENT SPECIFICATION

(11) **EP 0 498 504 B1**
(45) Date of publication and mention of the grant of the patent: **05.06.1996**
(21) Application number: 92200290.2
(22) Date of filing: 31.01.1992
(51) Int. Cl.: C08G 59/14, C08G 59/20, C08G 59/04, C08G 59/62

(54) **Process for preparing modified epoxy resins having a narrow molecular weight distribution**
Verfahren zur Herstellung eines modifizierten Epoxyharzes mit enger Molekulargewichtsverteilung
Procédé pour préparer des résines époxydes modifiées à distribution de poids moléculaire étroite

(30) Priority: 05.02.1991 GB 9102421
(43) Date of publication of application: 12.08.1992
(73) Proprietor: SHELL INTERNATIONALE RESEARCH MAATSCHAPPIJ B.V., NL-2596 HR Den Haag (NL)
(72) Inventor: Dijkstra, Tette Jan, B-1348 Ottignies/ Louvain-la-Neuve (BE); Decocq, Françoise Irène Marie Bernadette, B-1348 Ottignies/ Louvain-la-Neuve (BE); Jongepier, Wouter Willem, B-1348 Ottignies/ Louvain-la-Neuve (BE); Stachowiak, Stephen Anthony, B-1348 Ottignies/ Louvain-la-Neuve (BE)

(56) References cited:
- EP-A- 0 154 724
- EP-A- 0 244 897
- EP-A- 0 281 213
- US-A- 2 728 744
- US-A- 2 731 444
- US-A- 2 928 810
- US-A- 3 576 781

## Description

The advancing or fusing of epoxy resins by reacting with compounds having two or more primary hydroxyl groups is known in the art. When selecting aliphatic diols or triols as hydroxyl compound, it is difficult to avoid premature gelling of the reaction mixture, such gelling being associated with the formation of hard, infusible reaction products which serve no useful purpose and render the further processing of the advanced resins to produce laminates, castings or surface coatings impossible.

For example, when in line with suggestions disclosed in US-A 3576781, the diglycidyl ether of 2,2-bis(4-hydroxyphenyl)propane is reacted with a molar excess of ethylene glycol in the presence of stannic chloride catalyst or borontrifluoride etherate the reaction mixture gelates rapidly and further processing of the gelled mixture is not possible. Another important requirement to be met in the advancing with aliphatic di- or polyhydroxy compounds is that the viscosity of the advanced product should not hamper further processing into paint binder systems or compositions. This is difficult to achieve when selecting aliphatic triols as advancing agent, in that event the advanced products often tend to have an unattractively high viscosity.

A third requirement is the need for a relatively high selectivity in the advancing reaction. Production of unwanted by-products by side-chain reactions is to be avoided. In this invention the selective performance is shown in terms of a narrow molecular weight distribution (Mw/Mn) of the final product having been achieved.

The present invention provides a process for preparing a modified epoxy resin with a molecular weight distribution of from 1.9 to 4.5 and an epoxy group content (EGC) of less than 200 mmol/kg by reacting at a temperature of from 135 to 215 °C an aromatic epoxy resin having an epoxy group content of at least 250 mmol/kg and from 1.5 to 2.2 epoxy groups per molecule with from 5 to 170% molar excess of a dihydroxy compound of formula: 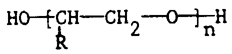 in which R is hydrogen or C₁-C₄ alkyl and n is a number of from 1 to 4 in the presence of an etherification catalyst selected from stannous halides and stannous carboxylates.

The preferred epoxy resins to be employed as starting material are diglycidyl ethers of aromatic dihydroxy compounds of which 2,2-bis(4-hydroxyphenyl)propane is especially preferred. Preferred etherification catalysts are stannous dichloride and stannous carboxylates derived from acids with from 4 to 16 carbon atoms, stannous octoate being most preferred. The preferred dihydric alcohol to be employed in the advancing reaction is monoethyleneglycol. 1,2-Propanediol, 1,2-butanediol, diethylene glycol and triethyleneglycol are examples of compounds that are slightly less preferred than mono ethyleneglycol.

By providing for a relatively large excess of the dihydric alcohol in the reaction mixture to be subjected to advancing a reduction of the epoxy group content of from 250 mmol/kg towards less than 200 mmol/kg is ensured. Reaction temperature, catalyst concentration and reaction period should likewise be adapted to suit that purpose. Some epoxy groups may remain in the final product, depending on the selected reaction conditions. Suitably the final product has an EGC in the range of from 20-100 mmol/kg. If desired reaction conditions may be selected such that at the end of the reaction a product is obtained comprising essentially no free epoxy groups. Such products may be particularly useful in can coating applications in view of future environmental requirements set to the level of detectable epoxy groups in can coatings. The preferred molar excess of the dihydric alcohol to be employed in the process is of from 50 to 120%. The preferred reaction temperatures are from 150 to 190 °C.

The restricted choice of eligible etherification catalyst is based upon their desired highly selective performance. For this reason, with the present narrowly selected catalysts it is possible to obtain final products with a MWD of 4.5 or less. Of more benefit are products with MWD of less than 3.2. Once again, it is not difficult to obtain these products because of the favourable selective performance of the catalysts to be employed. Remarkably, closely related catalysts, such as SnCl₄ or BF₃-etherate are not useful, as has been shown by comparative examples included herein.

The modified epoxy resins prepared with the advancing process of this invention are suitable for applications based on the use of ambient temperature curing sytems. Attractive curing systems in this respect include reactive isocyanates.

The relative proportions of modified epoxy resin and isocyanate curing agent are those generally employed in the curable binder art, typically from 0.8 to 1.2 isocyanate equivalent per epoxy equivalent. The present invention is, however, not restricted to use of ambient temperature curing systems, high temperature curing may be employed as well. Examples of the latter curing systems, e.g. for stoving lacquers, powder coatings, electrodeposition coatings, are phenol-formaldehyde resins, aminoplast resins and polycarboxylic compounds.

The modified epoxy resins of this invention are primarily intended to be employed in surface coatings. Other applications are also possible. The resins may be blended with conventional solvents such as aliphatic or aromatic hydrocarbons. Pigments, fillers, dispersing agents and other components known in the art of surface coating formulations may be added to the curable resin systems comprising modified epoxy resins made in accordance with the process of this invention.

### Example 1

EPIKOTE 828 (EPIKOTE is a trade mark, EGC 5300 mmol/kg) and 2,2-bis(4-hydroxyphenyl)propane were advanced in the absence of solvent, using tetramethylammoniumchloride catalyst to produce an epoxy resin with an EGC of 900 mmol/kg. To the advanced resin ethanediol was added in an amount to provide for a hydroxyl/epoxy equivalent ratio of 1.43 to 1, together with 10 %wt of ShellSol A solvent (ShellSol is a trade mark) and 0.276 %wt of stannous chloride dihydrate catalyst. The mixture was heated to 170 °C and reacted at that temperature until the EGC had decreased to 80 mmol/kg. Brookfields viscosity at 23 °C was determined upon addition of a solvent mixture comprising propyleneglycol monomethylether and ShellSol A (90:10 %wt) to produce 50 %wt solids content. Mw and Mn were determined by GPC analysis.

### Example 2

EPIKOTE 1009 (EGC 300 mmol/kg) was reacted with ethanediol (OH/epoxy equivalent ratio 1.25:1) at 170 °C during 6 hours in the presence of 10 %wt ShellSol A and 0.276 %wt stannous chloride dihydrate catalyst. Final EGC was 78 mmol/kg.

### Example 3

Example 1 was repeated under the same etherification conditions as marked in example 1, however, now employing a resin produced by advancing EPIKOTE 828 and 2,2-bis(4-hydroxyphenyl)propane to an EGC of 500 mmol/kg. Final EGC of the etherified resin was 84 mmol/kg.

### Example 4

EPIKOTE 3004 (EGC 1070 mmol/kg) was reacted with ethanediol (OH/epoxy equivalent ratio 2:1) at 175 °C during 5 hours in the presence of 10 %vol ShellSol A and 0.276 %wt stannous chloride dihydrate catalyst. Final EGC: 65 mmol/kg.

### Example 5

EPIKOTE 3004 was etherified with ethanediol (OH/epoxy equivalent ratio 1.6:1) at 175 °C during 7 hours in the presence of 0.276 %wt SnCl₂.2H₂O catalyst and 10 %wt ShellSol A. Final EGC: 91 mmol/kg.

### Example 6

EPIKOTE 3004 was reacted with ethanediol (OH/epoxy equivalent ratio 1.43:1) at 175 °C during 4 hours in the presence of 0.413 %wt SnCl₂.2H₂O catalyst and 10 %wt ShellSol A. Final EGC: 90 mmol/kg.

### Example 7

EPIKOTE 3004 was reacted with diethyleneglycol (OH/epoxy equivalent ratio 2:1) at 175 °C during 3.5 hours using 0.276 %wt SnCl₂.2H₂O catalyst and 10 %wt ShellSol A. Final EGC: 86 mmol/kg.

### Example 8

EPIKOTE 3004 was reacted with diethylene glycol (OH/epoxy equivalent ratio 1.6:1) at 185 °C during 3 hours in the presence of 10 %wt ShellSol A and 0.276 %wt SnCl₂.2H₂O catalyst. Final EGC: 108 mmol/kg.

### Example 9

EPIKOTE 828 was advanced with 2,2 bis(4-hydroxyphenyl)propane in the absence of solvent, employing tetramethylammoniumchloride catalyst to produce an epoxy resin with an EGC of 500 mmol/kg. This resin was etherified with ethanediol (OH/epoxy equivalent ratio 2.15:1) at 170 °C during 5 hours in the presence of 10 %wt ShellSol A and 0.276 %wt SnCl₂.2H₂O catalyst. Final EGC: 85 mmol/kg.

### Example 10

EPIKOTE 828 was advanced with 2,2-bis(4-hydroxyphenyl)propane in the absence of solvent, employing tetramethylammoniumchloride catalyst to produce a resin with an EGC of 650 mmol/kg. This resin was etherified with ethanediol (OH/epoxy equivalent ratio 1.8:1) at 175 °C during 6.5 hours in the presence of 10 %wt ShellSol A and 0.276 %wt SnCl₂.2H₂O catalyst. Final EGC was 85 mmol/kg.

### Example 11

The advanced resin of example 10 was etherified with ethanediol (OH/epoxy equivalent ratio 1.43:1) at 175 °C during 6.5 hours in the presence of 10 %wt ShellSol A and 0.276 %wt SnCl₂.2H₂O catalyst. Final EGC was 71 mmol/kg.

### Example 12

EPIKOTE 828 was reacted with the dimeric fatty acid PRIPOL 1022 (PRIPOL is at trade mark) employing a COOH/epoxy equivalent ratio of 0.5:1. The reaction mixture was heated from 100 to 140 to 150 °C at a rate of 1 °C/min. The esterification catalyst employed was ethyltriphenyl phosphonium iodide (0.03 %wt) and the reaction was continued untill the acid number of the reaction mixture has been reduced to 3 mg KOH. At that moment the etherification of the remaining epoxy groups was started by the addition of 1,2-propanediol (OH/epoxy equivalent ratio 2:1) and 0.6 %wt SnCl₂.2H₂O. The temperature was raised to 180 °C and maintained at that level for 3.5 hours untill the EGC of the reaction mixture had been reduced to less than 100 mmol/kg.

### Example 13

EPIKOTE 828 was advanced with 2,2 bis(4-hydroxyphenyl)propane in the absence of a solvent employing tetramethyl ammoniumchloride catalyst to produce an epoxy resin with an EGC of 253 mmol/kg. This resin was etherified with ethanediol (OH/epoxy equivalent ratio 2.15:1) at 170 °C during 5 hours in the presence of 10 %wt ShellSol A and 0.276 %wt SnCl₂.2H₂O catalyst. Final EGC: 156 mmol/kg.

The etherified resins prepared in examples 2 to 13 were evaluated by determination of Brookfields viscosity at 23 °C and Mw/Mn ratio following the procedure set out in example 1. (The viscosity of the resin of example 2 was determined at a solids content of 50 %wt in a 80:20 %wt mixture of cyclohexanone and xylene, the viscosity of the resin of example 12 was determined at a solids content of 40 %wt in butylether of ethyleneglycol.) The results are marked in TABLE I. In none of examples 1 to 13 any problems occurred as to gelling of the reaction mixtures during etherification.

In contrast thereto gelling of the reaction mixtures to a degree that was so severe that the etherification reaction had to be stopped, occurred in the comparative examples A, B and C reported below.

### Example A

Example 9 was repeated under identical conditions apart from substituting SnCl₄ for the SnCl₂.2H₂O catalyst. The reaction mixture gelled completely within a few minutes.

### Example B

Example 1 was repeated under identical conditions apart from substitution of BF₃ etherate for SnCl₂.2H₂O catalyst. Gelling was complete in 4 hours.

### Example C

Example 7 was repeated under identical conditions apart from substituting PEG 400 (polyethylene glycol) for diethylene glycol. In 2.5 hours the reaction mixture had gelled completely.

### Example 14

Can lacquer formulations were prepared from each of the etherified resins produced in examples 1 to 13 employing curing agents CYMEL 301 (CYMEL is a trade mark) and Phenodur PR 217 (Phenodur is a trade mark).
Solids content: 35 %wt
Solvent: propyleneglycol monomethylether and ShellSol
A (90:10 %wt).
Substrate: tin plates
Coating thickness: 5 microns

The results are marked in TABLES II (CYMEL 301 cure, resin/c.a. weight ratio 80/20) and III (Phenodur PR 217 cure, resin/c.a. weight ratio 70/30). In these tables the sterilisation resistance is marked on a relative scale: +5 excellent, -5 failing completely.

**TABLE I**

| Resin Example | Viscosity (Pa.s) | Mw/Mn |
|---|---|---|
| 1 | 6.5 | 2.29 |
| 2 | 18.9 | 4.66 |
| 3 | 6.8 | 3.11 |
| 4 | 4.3 | 2.12 |
| 5 | 6.7 | 2.23 |
| 6 | 5.3 | 1.93 |
| 7 | 16.5 | 3.51 |
| 8 | 32.5 | 2.73 |
| 9 | 29 | 2.79 |
| 10 | 12 | 2.49 |
| 11 | 23 | 2.90 |
| 12 | 0.35 | 3.27 |
| 13 | 45.0 | - |

**TABLE II**

| Resin Example | Cure schedule min/°C | MEK double rubs | Wedge bend % failure | Sterilisation Resistance | | |
|---|---|---|---|---|---|---|
| | | | | Water | Acid | Sulphur |
| 1 | 10/180 | >100 | 23 | 5 | 3 | 5 |
| 2 | 10/180 | >100 | 12 | 5 | 4 | 5 |
| 3 | 10/160 | 30 | 5 | 4 | 2 | - |
| 4 | 12/180 | >100 | 12 | 5 | 1 | 1 |
| 5 | 12/180 | >100 | 14 | 5 | 1 | 1 |
| 6 | 12/180 | 65 | 22 | 4 | -1 | 3 |
| 7 | 12/180 | - | 100 | 3 | -1 | 3 |
| 8 | 12/180 | - | 52 | 3 | -1 | 3 |
| 9 | 10/160 | 40 | 5 | 5 | 2 | - |
| 10 | 10/180 | 80 | 12 | 5 | 1 | - |
| 11 | 10/160 | 60 | 2 | 4 | 3 | - |
| 13 | 5/150 + 60/130 | >100 | 8 | 5 | 1 | 3 |

**TABLE III**

| Resin Example | Cure schedule min/°C | MEK double rubs | Wedge bend % failure | Sterilisation Resistance | | |
|---|---|---|---|---|---|---|
| | | | | Water | Acid | Sulphur |
| 1 | 10/180 | >100 | 30 | 5 | 3 | 5 |
| 2 | 10/180 | >100 | 25 | 5 | 4 | 5 |
| 3 | 10/180 | >100 | 14 | 5 | 4 | 5 |
| 4 | 10/200 | 90 | 25 | 5 | 2 | 4 |
| 5 | 10/200 | 100 | 20 | 5 | 2 | 4 |
| 6 | 10/200 | 100 | 25 | 5 | 2 | 3 |
| 7 | 10/200 | 80 | 20 | 5 | 2 | 2 |
| 8 | 10/200 | 90 | 20 | 5 | 2 | 2 |
| 9 | 10/200 | >100 | 29 | 5 | 3 | 5 |
| 10 | 10/200 | >100 | 33 | 5 | 4 | 5 |
| 11 | 10/200 | >100 | 30 | 5 | 5 | 5 |
| 12 | 10/200 | >100 | 27 | 5 | 3 | 4 |

## Claims

1. A process for preparing a modified epoxy resin with a molecular weight distribution of from 1.9 to 4.5 and an epoxy group content of less than 200 mmol/kg by reacting at a temperature of from 135 to 215 °C an aromatic epoxy resin having an epoxy group content of at least 250 mmol/kg and from 1.5 to 2.2 epoxy groups per molecule with from 5 to 170% molar excess of a dihydroxy compound of formula: 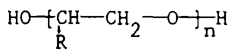 in which R is hydrogen or C₁-C₄ alkyl and n is a number of from 1 to 4, in the presence of an etherification catalyst selected from stannous halides and stannous carboxylates.

2. A process as claimed in claim 1 wherein the epoxy group content of the modified epoxy resin prepared lies in the range of from 20 to 100 mmol/kg.

3. A process as claimed in claim 1 or 2, in which the epoxy resin is a diglycidyl ether of an aromatic dihydroxy compound.

4. A process as claimed in any one of claims 1 to 3, in which the molecular weight distribution is less than 3.2.

5. A process as claimed in any one of claims 1 to 4, in which the molar excess is from 50 to 120%.

6. A process as claimed in any one of claims 1 to 5, in which the reaction temperature is from 150 to 190 °C.

7. A process as claimed in any one of claims 1 to 6, in which in the dihydroxy compound n is 1 and R is hydrogen.

## Patentansprüche

1. Verfahren zur Herstellung eines modifizierten Epoxiharzes mit einer Molekulargewichtsverteilung von 1,9 bis 4,5 und einem Epoxigruppengehalt von weniger als 200 mmol/kg durch Umsetzen eines aromatischen Epoxiharzes mit einem Epoxigruppengehalt von wenigstens 250 mmol/kg und mit 1,5 bis 2,2 Epoxygruppen je Molekül mit 5 bis 170% molaren Überschuß an einer Dihydroxyverbindung mit der Formel: 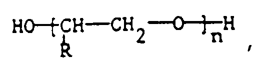 worin R für Wasserstoff oder C₁-C₄-Alkyl steht und n eine Zahl von 1 bis 4 bedeutet, bei einer Temperatur von 135 bis 215°C in Anwesenheit eines unter Zinn(II)halogeniden und Zinn(II)-carboxylaten ausgewählten Veretherungskatalysators.

2. Verfahren nach Anspruch 1, worin der Epoxygruppengehalt des modifizierten Epoxiharzes im Bereich von 20 bis 100 mmol/kg liegt.

3. Verfahren nach Anspruch 1 oder 2, worin das Epoxiharz ein Diglycidylether einer aromatischen Dihydroxyverbindung ist.

4. Verfahren nach einem der Ansprüche 1 bis 3, worin die Molekulargewichtsverteilung kleiner als 3,2 ist.

5. Verfahren nach einem der Ansprüche 1 bis 4, worin der molare Überschuß von 50 bis 120% beträgt.

6. Verfahren nach einem der Ansprüche 1 bis 5, worin die Reaktionstemperatur von 150 bis 190°C beträgt.

7. Verfahren nach einem der Ansprüche 1 bis 6, worin in der Dihydroxyverbindung n den Wert 1 aufweist und R Wasserstoff bedeutet.

## Revendications

1. Procédé de préparation d'une résine époxy modifiée avec une répartition des poids moléculaires de 1,9 à 4,5 et une teneur en radicaux époxy (TRE) inférieure à 200 mmoles/kg par la réaction, à une température de 135 à 215°C, d'une résine époxy aromatique possédant une TRE d'au moins 250 mmoles/kg et de 1,5 à 2,2 radicaux époxy par molécule, avec un excès molaire de 5 à 170% d'un composé dihydroxylé de la formule 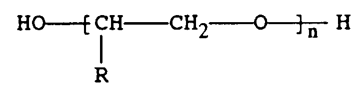 dans laquelle R représente un atome d'hydrogène ou un radical alkyle en C₁ à C₄ et n est un nombre dont la valeur varie de 1 à 4, en présence d'un catalyseur d'éthérification choisi parmi les halogénures stanneux et les carboxylates stanneux.

2. Procédé suivant la revendication 1, caractérisé en ce que la teneur en radicaux époxy de la résine époxy modifiée préparée se situe dans la plage de 20 à 100 mmoles/kg.

3. Procédé suivant la revendication 1 ou 2, caractérisé en ce que la résine époxy est un éther diglycidylique d'un composé aromatique dihydroxylé.

4. Procédé suivant l'une quelconque des revendications 1 à 3, caractérisé en ce que la distribution des poids moléculaires est inférieure à 3,2.

5. Procédé suivant l'une quelconque des revendications 1 à 4, caractérisé en ce que l'excès molaire varie de 50 à 120%.

6. Procédé suivant l'une quelconque des revendications 1 à 5, caractérisé en ce que la température de réaction varie de 150 à 190°C.

7. Procédé suivant l'une quelconque des revendications 1 à 6, caractérisé en ce que n est égal à 1 et R représente un atome d'hydrogène dans le composé dihydroxylé.
